# EUROPEAN PATENT APPLICATION

(11) **EP 4 595 764 A1**
(43) Date of publication of application: **06.08.2025**
(21) Application number: 23789388.8
(22) Date of filing: 15.09.2023
(51) Int. Cl.: A23F 5/12

(54) **PROCESSES FOR COMPACTING COFFEE PELLETS WITH DIMENSIONAL STABILITY**

(30) Priority: 28.09.2022 PT 2022118223
(71) Applicant: Novadelta - Comércio e Indústria de Cafés, Unipessoal Lda, 1950-041 Lisboa (PT)
(72) Inventor: NABEIRO, Rui Miguel, 7370-112 Campo Maior (PT); DE FIGUEIREDO BRANCO, João André, 1885-091 MOSCAVIDE (PT)
(74) Representative: Patentree
(86) International application number: PCT/PT2023/050027
(87) International publication number: WO 2024/072243

(57) **Abstract**

The present invention discloses industrial processes of compaction of coffee tablets (1), in particular roast and ground coffee tablets adapted for preparing coffee-based beverages by means of extraction by a pressurized flow with a flow pressure bigger than 5 bar, including beverages of the espresso type and similar, and presenting advantageous features in terms of extraction efficacy and form keeping of the compacted coffee tablet, as well as in terms of production efficiency and capacity.

The present invention further discloses compacted coffee tablets (1) adapted for preparing coffee-based beverages and presenting advantageous features in terms of dimensional stability after compaction and of coffee extraction efficacy by a pressurized extraction flow.

## Description

### Field of the invention

The present invention refers to industrial processes of production of compacted tablets for preparing beverages, in particular of tablets of roast and ground coffee beans adapted for preparing beverages by means of extraction by a pressurized flow, as well as to compacted tablets for preparing beverages with the features resulting from said processes.

### Background of the invention

The prior art includes several documents relating to processes of production of single portions of compacted coffee, generally designated by compacted coffee tablets for use in the preparation of coffee-based beverages. Said documents refer to several challenges associated with this type of process of compaction of coffee, in particular because of the physicochemical characteristics of coffee and of the relative dimensions of the coffee particles to be compacted.

The compaction of a certain quantity of roast and ground coffee beans presents several challenges, mostly associated with the physicochemical characteristics of previously roast and ground coffee beans, including the release of volatile gases, oils and also of the dimension of the grounds of coffee beans.

In this context, the reader shall also be familiar with the fact that there are different types of coffee, including soluble coffee mostly used for preparing coffee by means of percolation, and roast and ground coffee mostly used for preparing coffee of the espresso type. These two types of coffee present different physicochemical properties that are relevant to the compaction process, whereby part of the prior art addresses the problem of compacted tablets of soluble coffee or for extraction by means of percolation, that is, by means of a flow at ambient pressure or bigger than the latter and smaller than 5 bar.

For example, the document EP2154987 B1 discloses a production method of a compacted coffee tablet that is suited for use in a filter coffee machine, that is, by means of an ambient pressure flow. In this case, the compacting pressure should be comprised between 70 and 130 bar. Before of compacting, the roast and ground coffee beans can present a relative humidity between 2 and 8%. The obtained coffee tablet can present a hardness in the range of 30 - 55 N, and a weight between 2 and 15 g, whereby the hardness of coffee tablet is designed for disintegration thereof at a given moment, and by a given manner.

The present invention addresses the problem of compacting coffee tablets for preparing beverages by means of extraction by a pressurised flow, with a flow pressure above 5 bar, and optionally with a flow pressure comprised between 5 and 20 bar, preferentially between 10 and 15 bar.

The compaction of a single portion of roast and ground coffee constitutes a different and unique type of problem because can be determined by different particular properties of the roast and ground coffee beans, including as a function of the roasting degree, of the residual humidity and of the dimension of the granulate and relative distribution of the dimension of particles after grinding of the coffee beans, whereby these properties have relatively important impact upon a compaction process.

There are in this case several physical parameters that can play an important role both in keeping the shape of the compacted tablet, promoting or constraining its physical disaggregation, as well as upon the beverage preparation itself, including to improve a given type of interaction of the respective coffee quantity with a fluid.

These several aspects have a particular relevance in the case of coffee of the espresso type, or similar, whereby the compacted tablet should be impinged by a pressurised flow at a flow pressure bigger than 5 bar, preferentially bigger than 10 bar.

In this context, the dimension of particles, the humidity, but also the degree of roasting of the ground coffee beans, are parameters that can be influential upon the result of compaction.

The prior art includes references to degassing problems, such as referred to in document CA 808588 A that discloses the possibility of producing compacted tablets of roast and ground coffee beans.

The document EP0229920 B1 discloses a process for producing coffee tablets by means of compacting a mass of particles of ground and roast coffee beans with a humidity of at least 3%, in particular between 3% and 6% in mass, 4% being preferred, and an average particle dimension between 0,4 mm and 2,0 mm, in particular between 0,6 mm and 1,2 mm. The compaction of the coffee mass is carried out by means of applying a pressure comprised between 20,7 and 48,3 MPa, a value of 39,5 MPa being preferred. The process further includes coating the exterior of the compacted tablet with an edible material, dispersible in water, whereby said coating includes humidification with aqueous liquid and the application of dry solids.

The document WO2004/034797 A1 discloses a process for production of compacted coffee tablets in a rotary press and including a step of cooling before compression.

The document EP2129232 B1 discloses a process of compaction of vegetable powders including only one step of compression that includes a compression period, and whereby the powder used for compaction is roast and ground coffee that presents a humidity between 3 and 10% in weight, and an average dimension between 0,2 and 3 mm, preferentially between 0,4 and 2 mm.

The documents EP3081092 B1 and EP2416665 B1 disclose a roast and ground coffee tablet that is also adapted for extraction of coffee by dripping, that is, by means of a flow at atmospheric pressure. In this case, the tablet is obtained by means of a process that includes two compression phases, in particular a first phase of so-called pre-compression with a pressure between 36,1 MPa and 84,8 MPa, followed by a compression phase, whereby the value of pressure exerted in the pre-compression phase should be comprised between 20% and 100% of the compression pressure. The compacted coffee tablet should present a hardness greater than 30 N and a friability smaller than 10%.

The document WO2008/123775 A1 discloses a method for producing a coffee tablet, and a coffee tablet obtained by means of said method. Said coffee tablet can present a generally irregular shape.

In what refers to the critical periods of process, the documents US 9,474,290 B2 and US 9,756,869 B2 disclose a process for production of a compacted tablet of roast and ground coffee in two phases, but adapted for extraction in a drip coffee apparatus. That is, the coffee tablet is compacted so that readily breaks when impinged by hot water at an ambient pressure during extraction.

In particular, the process includes a step of pre-compression with a pressure between 10,6 MPa and 63,6 MPa, and a compression with a pressure between 63 and 169,7 MPa, both steps carried out in the same compaction die, so as to produce a tablet with a hardness of at least 30 N. A greater hardness of the tablet should be, in fact, associated with a greater structural fragility to rupture.

Moreover, the documents disclose considering a delay period of between 80 and 900 milliseconds between the pre-compression and the main compression, and that the total duration from the pre-compression until main compression is of approximately 0,1 to 1 seconds. The delay period and timings that are set should also be related with minimizing dimensional variations of the tablet after compaction, including as a result of expansion of the compacted volume.

The document WO 2010/137965 A1 refers a capsule including 5 to 6,5 grams of roast and ground coffee beans, whereby this quantity is compacted with a compaction force comprised between 50 and 800 N, preferentially between 400 and 600 N.

The document WO 2020/089403 A1 discloses a coffee container that includes a cake of roast and ground coffee that can be compacted by means of applying a compression force comprised between 0,5 kN and 15 kN, preferentially between 1 kN and 10 kN.

The documents WO 2021/118376 A1 and WO 2021/118377 A1 have been filed by the Applicant of the present invention and are relative to compacted coffee tablets. Among several aspects, said documents refer the application of a compaction force comprised between 4 and 6 kN, preferentially between 4,5 and 5,5 kN, so that one can obtain compacted tablets with a hardness comprised between 10 and 20 N, preferentially between 13 and 17 N.

According to tests that have been conducted, it is noted that the application of a compaction force that is too high can lead to a crushing of particles of roast and ground coffee beans, as well as to compacted tablets with a relatively high hardness, and that this result can constrain the flux of pressurized flow through the compacted tablet and, therefore, reduce the efficacy of extraction. Moreover, there are several aspects that can be influential upon the productivity of the production process at industrial scale, including in terms of production capacity and waste rate as a result of defects and losses.

### General description of the invention

The objective of the present invention is to provide a process for production of compacted coffee tablets for preparing coffee-based beverages, including a step of compaction of tablets of roast and ground coffee adapted so that these compacted tablets present better structural and operative features in view of preparing coffee-based beverages by a pressurised flow, including coffee of the espresso type.

The best structural characteristics include resistance to rupture and disaggregation, which would be disadvantageous in terms of the handling of the tablets, as well as the minimisation of dimensional variations after application of the compaction force, which would be disadvantageous for individual packaging of the coffee tablets afterwards.

The best operative characteristics include providing a sufficient porosity enabling a flux of pressurised flow along a prevailing direction, instead of a substantial blocking thereof, and the greater productivity of the process including with production greater capacities and less waste.

This objective is solved according with the present invention by means of a process according to claim 1.

The process according to the invention includes successive compacting cycles in a compaction machine, without interruption intervals between a plurality of cycles, whereby each compacting cycle includes the steps described in claim 1.

In particular, it is an objective of the present invention to provide coffee tablets with better dimensional stability, including smaller volume increase following compaction, whereby the value and distribution of the compaction forces determines in great measure this behaviour, as well as other parameters relevant for the handling and extraction efficacy of the compacted coffee tablets by a pressurised flow with a flow pressure bigger than 5 bar.

In fact, the application of compaction force has a particular relevance in the case of compaction of quantities of roast and ground coffee beans, not only in terms of the characteristics of hardness and compacted density, but also in terms of dimensional stability of the coffee tablet after compaction.

According to the invention, the process can include the successive compaction of the individual quantities of roast and ground coffee beans by means of applying vertically reciprocal forces thereupon with a value of compaction force comprised between 5 kN and 50 kN.

The process can include the application of compaction force smaller than 50 kN, including a first step of pre-compaction with a first compaction force.

The process can include a first step of pre-compaction with a first compaction force followed by a second step of compaction with a second compaction force, whereby the first compaction force is bigger than the second compaction force.

The process can include the successive application of two compaction forces, whereby any of the compaction forces is smaller than 40 kN and preferentially bigger than m 5 kN.

In particular, the process can include a first compaction force smaller than 20 kN, to reduce the increase of volume of the compacted coffee tablet that can occur after compaction.

The process can include the application of a first compaction force that can be at least twice bigger than the second compaction force.

A second objective of the present invention is to disclose processes of compaction that provide coffee tablets with better properties in view of extraction by a pressurised flow with a flow pressure bigger than 5 bar.

A related aspect of the present invention is the supply of roast and ground coffee beans for compaction with a Hauser index smaller than 1.30, to provide good fluidity of the edible substance, that is, the roast and ground coffee beans, and minimize the tendency thereof for aggregating in portions of bigger dimensions, for example as a result of the adhesive action of coffee oils released during the action of compaction. This parameter range of the Hausner index provides the possibility of supplying the individual quantities of edible substance, between 5 and 7 g in mass, in more reliable manner an in relatively high delivery speeds, to respective individual collection openings of a compaction machine.

A second set of relevant features is that of the mains characteristics of the coffee tablet obtained, in view of a use thereof in processes of extraction of espresso type coffee, or similar.

In this sense, the coffee tablets present a hardness after compaction that corresponds to less crushing of the particles of roast and ground coffee beans initially supplied to a compaction apparatus, to not substantially constrain the liquid flow paths through the compacted tablet.

According to tests carried out by the Applicant, the compacted coffee tablets should present a hardness comprised between 4N and 30 N, preferentially between 5N and 20 N, particularly preferentially between 6N and 18 N.

In the case of a first embodiment, it is preferred when the coffee tablet presents a hardness comprised between 4 and 10 N, preferentially between 5 and 8 N, particularly preferentially between 5 and 7 N.

In the case of a second embodiment, it is preferred when the coffee tablet presents a hardness comprised between 10 and 20 N, preferentially between 12 and 18 N, particularly preferentially between 14 and 18 N.

in the context of the present invention, the compacted coffee tablets should further present a compacted density comprised between 0,15 g/ml and 1,0 g/ml, preferentially between 0,30 g/ml and 0,75 g/ml. This range correspond to the most advantageous values in terms of the possibility of having the pressurised flow through the compacted tablet without the risk of being blocked.

The combination of these two parameters is particularly advantageous in the context of the present invention.

Moreover, it is advantageous when said quantity of ground coffee corresponds to granulated coffee presenting a granulometry distribution with at least 90% of the particles with a dimension comprised between 100 mm and 3000 mm, preferentially with at least 85% of the particles with an average dimension comprised between 250 mm and 2000 mm.

In particular, it is advantageous when said quantity of roast and ground coffee is comprised between 4 and 8 grams, preferentially between 5 and 7 grams, particularly preferentially between 5,3 and 6,7 grams.

The compacted tablets can present a humidity content comprised between 1 and 5% in mass, preferentially between 2 and 4% in mass.

An associated objective of the present invention is further to provide a compacted coffee tablet presenting a given quantity of roast and ground coffee that presents better dimensional and physical properties in view of the extraction efficacy and of the physical stability of the compacted tablet.

This objective is solved by the present invention by a compacted coffee tablet according to claim 14.

The compacted coffee tablet is preferentially obtained by means of a process according to claims 1 to 13.

### Description of the Figures

The invention shall be explained hereinafter in greater detail based upon preferred embodiments and on the attached Figures.

The Figures show, in simplified schematic representations:
- Figure 1:: top and side views of a compacted tablet according to prior art;
- Figure 2:: flow diagram of a compaction process of a compacted tablet according to prior art;
- Figure 3:: schematic view of compaction machine (1) in a process according to the invention;
- Figure 4:: side and top views of compaction machine (1) in a process according to the invention;
- Figure 5:: flow diagram of an embodiment of the process according to the present invention;
- Figure 6:: flow diagram of an embodiment of the process according to the present invention;
- Figure 7:: diagram of a first moment in a process of compaction of a compacted tablet (1) according to the invention;
- Figure 8:: diagram of a second moment in a process of compaction of compacted tablet (1) according to the invention.

### Detailed description of preferred embodiments of the invention

The process according to the present invention refers to the production of compacted coffee tablets (1) adapted for preparing coffee-based beverages, in particular for use in extraction devices of beverage preparation apparatus of espresso type coffee.

The compaction process relates to the production of compacted coffee tablets (1) of a granulate of edible substance mostly including previously ground and roast coffee beans, that is, so that the previously ground and roast coffee beans represent at least the most part the weight of an initial quantity (Qᵢ) of edible substance to be compacted.

The edible substance initially supplied for compaction includes one of:
- roast and ground coffee beans, including presenting a light roast, or a dark roast or an intermediary roast, or a mixture of at least one of: a light roast, an intermediary roast and a dark roast;
- a mixture of roast and ground coffee beans with another edible substance in a granular form.

In particular, the process includes a step of supplying an edible substance that can include roast and ground coffee beans in at least 75%, preferentially in at least 85% in mass fraction.

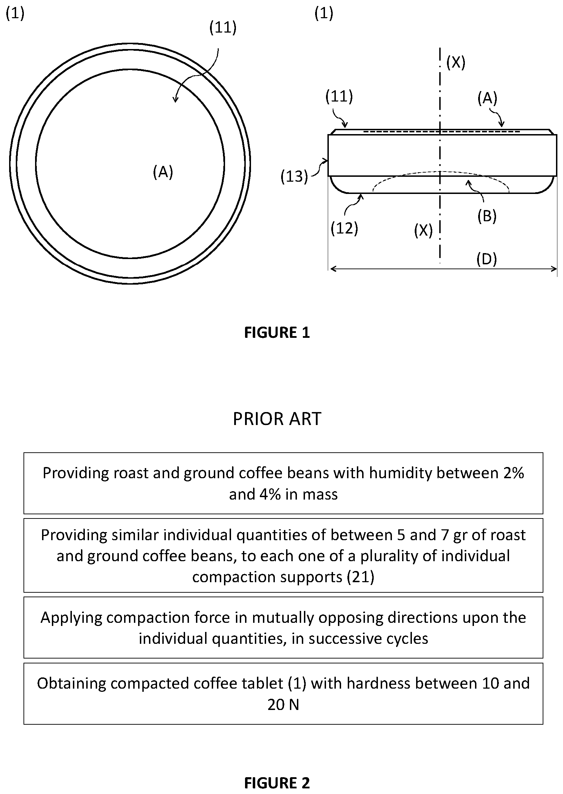

**Figure 1** represents an embodiment of coffee tablets (1) and compaction processes of this type, already previously disclosed by the author and being, therefore, part of the prior art.

The compacted coffee tablet (1) can present a cross section with a total width (D_{T}) and generally symmetric shape relative to a central longitudinal axis (XX).

The compacted coffee tablet (1) can present an upstreamoriented portion and a downstream-oriented portion with respect to a prevailing flow direction, and further present an intercalary portion that extends between said upstream and downstream-oriented portions and along said total width in at least most part of its extension along the prevailing flow direction.

The compacted coffee tablet (1) can include a downstream-oriented portion presenting a downstream cavity (B) disposed in centred manner and that extends in curved surface when seen in cross cut, along part of the cross dimension of said downstream-oriented portion, so that the perimeter region of said downstream cavity (B) presents a part that extends along a plane that is at least approximately transversal to the exterior perimeter region of said downstream-oriented portion.

As represented in **Figure 2****,** the process according to the prior art basically includes the successive steps of supplying an initial quantity (Qᵢ) of edible substance to a compaction receptacle, applying a compaction force (F) upon said initial quantity (Qᵢ) of compacted coffee tablet (1) and the step of discharge thereof out of the compaction receptacle.

According to the prior art, the compacted coffee tablet (1) obtainable from the compaction process according to prior art can present a hardness comprised between 4 and 30 N.

Meanwhile, according to additional tests, Applicant established that it is advantageous to obtain coffee tablets (1) with a hardness that is preferentially comprised in at least one of the intervals: between 4 and 10 N, between 10 and 16 N and between 16 and 22 N, as shall be explained in greater detail further below.

The process includes providing a compaction machine (2) adapted for compaction of granular edible substances, in with a tablet format or similar.

The compaction machine (2) presents a plurality of individual collection openings (21) operable in interaction with compaction dies (22, 23).

The compaction machine (2) advantageously present a a compaction set that comprises at least 10, preferentially at least 20, particularly preferentially at least 30 individual collection openings (21) and respective compaction dies (22, 23), and is adapted so that provides at least approximately simultaneous compaction of individual quantities (Qᵢ) in at least part, preferentially in part of said individual collection openings (21).

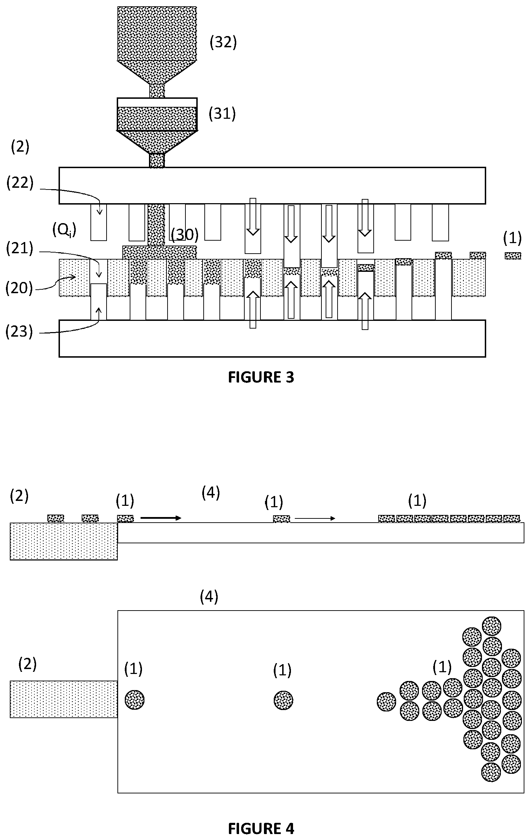

The compaction machine (2) can be a rotary tablets compaction machine as schematically represented in **Figure 3****.**

The compaction machine (2) in this case presents a compaction set that comprises a plurality of individual collection openings (21) that can be operatively associated with pair of compaction dies (22, 23) disposed along a circular alignment, and a rotor operable in rotation around a vertical axis, and presenting movement guides for top and bottom dies that operate in coordinated manner in mutually opposing vertical directions together with moulds, here designated by individual collection openings (21), of a moulds die (20) that is disposed between the top and bottom die guides. The moulds die (20) can be single piece or comprise individual segments or moulds.

The compaction dies (22, 23) can be disposed in pairs aligned in a vertical direction and configured so that can be operated in mutually reciprocate movements downwards and upwards along the vertical direction, so that apply a given compaction force upon a granulated content previously collected inside an individual collection opening (21).

The process can include a step of compaction a plurality of compacted coffee tablets (2), whereby the relative position of the compaction dies (22, 23) and the moment of application of a compaction force (F) can vary between successive individual collection openings (21).

The reader finds other details of this type of compaction machines in the prior art such that one here abdicates of a description thereof in greater detail.

Moreover, the process includes the supply of individual quantities (Qᵢ) of edible substance presenting a bulk density comprised between 0,250 and 0,500 g/ml, preferentially between 0,300 and 0,400 g/ml. It has been experimentally determined that this interval of values is more advantageous in terms of reliability of regulation and fluidity of the supply of individual quantities (Qᵢ) of between 5 g and 7 g of roast and ground coffee beans and with the granulometry values considered, to the compaction set that comprises the individual collection openings (21).

Moreover, the cycles of compaction are regulated so that the supply of compacted coffee tablets (1) by a compaction machine (2) presents a debit of at least 10.000 units per hour for each compaction set, preferentially a debit of at least 25.000 units per hour for each compaction set, that is, for each compaction machine (2).

The process according to the invention ca include the steps of supplying individual quantities (Qᵢ), of operating compaction forces (F₁, F₂) and of simultaneously discharging a plurality of compacted coffee tablets (1), but associated with different individual collection openings (21) of the compaction machine (2).

Before of the aforementioned steps, and previously to the supply of individual quantities (Qᵢ) to the individual collection openings (21), the process can include at least one of:
- a step of qualitative or quantitative characterisation of at least one of: a parameter associated with the degree of roasting after the latter, and a parameter associated with the dimension of the coffee granulate after grinding;
- a step of quantitative characterisation of the relative humidity of the roast and ground coffee beans to be compacted.

In particular, the process can include the characterisation of the roasting degree, roasting colour of the roast coffee beans, and can include the identification of the type of grinder and grinding dimensions used, or measurement of the grain dimension distribution.

Further considering the operation speeds of the compaction, the step of discharge of the compacted coffee tablets (1) out of the compaction machine (2) should be also regarded as relevant in combination with other efficiency aspects thereof, in particular so as to mitigate the risk of rupture of coffee tablets (1).

**Figure 4** schematically represents a discharge disposition downstream of the discharge exit of compacted coffee tablets (1) out of the compaction machine (2).

After application of the compaction force, the process according to the invention includes a step of discharge by means of a discharge disposition (4) configured so that induces a reduction of the exit speed of the tablets (1) by at least 70% along an extension of 50 cm, preferentially by at least 90% along an extension of 50 cm without colliding with other coffee tablets (1) previously discharged.

The discharge disposition (4) can include a sliding support presenting an extension of at least 0,5 m, preferentially at least 1 m and at most 2 m, so as to reduce the speed, preferentially also immobilising the compacted tablets (1). It is preferred when the sliding support presents a surface with a material and/or surface finishing adapted so that provides said reduction of speed and immobilisation.

The discharge disposition (4) can present a horizontal sliding support or with a first extension adjacent to the exit of the compaction machine (2) and inclined upwards relative to the exit of the compaction machine (2) - not represented in the figure.

The discharge disposition (4) can be operatively associated with a posterior collection and/ or transport station of coffee tablets (1) - also not represented in the figure.

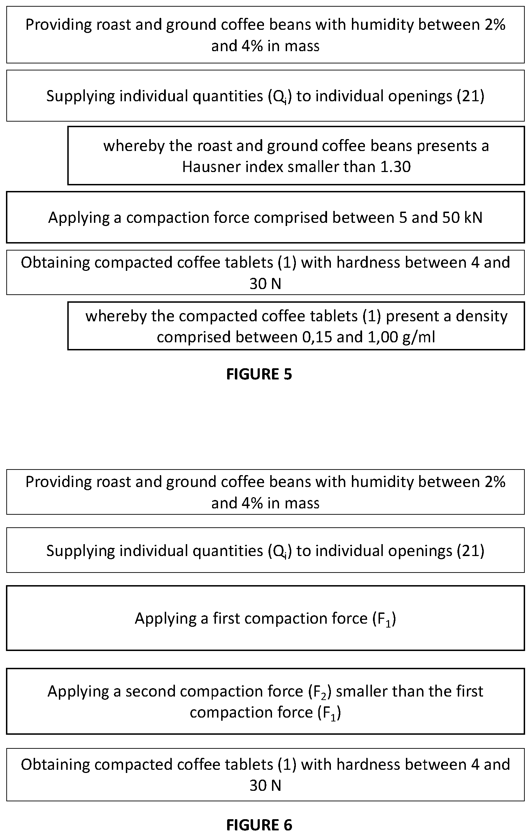

**Figures 5** and **6** represent preferred embodiments of the process according to the invention.

The edible substance to be compacted is supplied to the individual supports (21) in each compaction cycle by means of a filling disposition (30) adapted so that can supply individual quantities (Qᵢ) to a plurality of individual collection openings (21).

According to one aspect, the supply of individual quantities (Qᵢ) includes successive supply to a plurality of at least 15, preferentially to at least 20 individual collection openings (21) in each compaction cycle, whereby the successive supply of individual quantities (Qᵢ) to said plurality of individual supports (21) is preferentially carried out in a period of less than 1 second, particularly preferentially of less than 0,5 seconds.

The supply of individual quantities (Qᵢ) can include the at least approximately simultaneous supply of a fraction of the plurality of individual supports (21), preferentially at least 2, more preferentially at least 4 individual collection openings (21).

The filling disposition (30) is provided in operational connection with a first supply disposition (31) configured so that can collect an upstream quantity of edible substance.

According to one aspect, the first supply disposition (31) presents a collection volume that is smaller than 1 m³, preferentially smaller than 0,5 m³, whereby the volume of the first supply disposition (31) preferentially further presents an aspect ratio between height and width that is smaller than 8:1, preferentially smaller than 5:1.

In this context, it is advantageous to provide at least one second supply disposition (32) upstream of the first supply disposition (31), and configure the control means of the process so that the rate of supply of the first disposition (31) by the second supply disposition (32) is at least approximately equal to the rate of discharge of edible substance from the first supply disposition(31) to the filling disposition (30), so that can keep a reference quantity of edible substance in the first supply disposition (31).

Considering that the roast and ground coffee beans present oils and some humidity, these characteristics contribute to mitigate the possibility of adhesion and/or partial compaction of portions in the downstream part of the first supply disposition (31) as a result of the accumulated weight on top of said portions, and thereby a greater difficulty in supplying the individual quantities (Qᵢ).

The supply of individual quantities (Qᵢ) for compaction can be regulated to supply a plurality of individual quantities (Qᵢ) of edible substance with a total mass comprised between 4,5 and 12,5 g, preferentially between 5,0 and 12,0 g.

The supply of individual quantities (Qi) for compaction can be regulated to one of the following intervals:
- a mass comprised between 4,8 and 7,2 g for a first type of coffee tablets (1);
- a mass comprised between 8,0 and 12,0 g for a second type of coffee tablets (1).

The supply of individual quantities (Qᵢ) for compaction is preferentially carried out along a vertical direction to a plurality of respective individual collection openings (21). Moreover, it is further preferred when the supply of individual quantities (Qᵢ) is carried out at a supply distance smaller than 1 mm, preferentially smaller than 0,5 mm above the feeding opening of the individual collection openings (21) in the top region thereof.

It is particularly advantageous when the supply of individual quantities (Qᵢ) is provided from a supply chamber in direct connection with at least one of, preferentially with a plurality of individual collection openings (21), to reduce the losses of edible substance of said individual quantities (Qᵢ) to less than 5%, preferentially to less than 3%, in each compaction cycle.

An objective of the present invention is that the compacted coffee tablet (1) presents enhanced mechanical resistance and at the same time flow permeability, adapted for the preparation of coffee-based beverages by means of impinging the coffee tablet with a pressurised fluid flow, including of the espresso type coffee, without the coffee tablet (1) breaking up or releasing portions thereof.

As represented in the diagram of **Figure 5****,** the process according to the present invention includes providing a previously determined individual quantity (Qᵢ) mostly including roast and ground coffee beans to a compaction receptacle (22) and exerting a compaction force (F) comprised between 5 kN and 50 kN.

In this context, it is noted that the compaction force (F) can, together with other parameters such as for example the average particle dimension, relative humidity, determine to a great extent the hardness and porosity, and hence the permeability, of the compacted coffee tablet (1).

In general, in order to obtain a good coffee extraction without rupture or disaggregation of the compacted coffee tablet (1), it is on the one hand advantageous when the latter presents a hardness as reduced as possible, and simultaneously a porosity, quantified by the compacted density, that enables the pressurised flow, and on the other hand, a hardness within an interval of values sufficient to ensure maintaining the shape without breaking when impinged by the pressurised flow at the time of extraction of the espresso coffee beverage.

In this context, and according to tests that have been carried out, using the interval of granulometry of coffee beans referred in the present description, it is advantageous when the coffee tablets (1) present a hardness comprised between 4 and 30 N.

In the case of a first preferred embodiment, in order to obtain the best extraction results, it has been experimentally determined that the hardness preferentially presents a value comprised between 13 N and 25 N, particularly preferentially between 16 and 22 N.

According to a second embodiment, it has been experimentally determined that the hardness preferentially presents a value comprised between 4 N and 20 N, particularly preferentially between 5 and 8 N.
it is preferred when the hardness of different coffee tablets are adapted for different values of flow pressure of the extraction flow, for example between 5 bar and 10 bar, between 10 and 15 bar and between 15 bar and 20 bar.

In this sense, according to tests that have been made, and alternatively to the aforementioned embodiment, it is advantageous when the compacted coffee tablets (1) present a hardness comprised between 4 N and 10 N, between 10 N and 16 N or between 16 N and 22 N, respectively for each aforementioned interval of flow pressure.

According to tests made, the aforementioned hardness intervals can provide coffee tablets (1) adapted so that provide better relation between resistance to rupture and flow crossing, respectively in the case of extraction flows with bigger values of flow pressure.

These intervals of hardness correspond to the most advantageous to ensure the resistance of the coffee tablet to exterior impacts, without the coffee tablet breaking or the release of pieces thereof.

Moreover, as aforementioned, one parameter relevant for the extraction efficacy of the coffee tablet (1) is the compacted density.

In this context, it has been experimentally determined that it is particularly advantageous for the extraction efficacy when the compacted coffee tablet (1) presents a compacted density comprised between 0,15 g/ml and 1,0 g/ml, preferentially between 0,300 and 0,750 g/ml, particularly preferentially between 0,400 and 0,600 g/ml. In view of obtaining better results of extraction it has been determined that the compacted density preferentially presents a value comprised between 0,400 and 0,600 g/ml, particularly preferentially between 0,350 and 0,550 g/ml.

It is preferred when the weight of the compacted coffee tablet (1) corresponds to at least 98%, preferentially to at least 99% of the initially supplied individual quantity (Qᵢ).

Besides of hardness and compacted density, the dimensional format of the coffee tablet (1) is also considered as a relevant aspect in order to obtain a good extraction efficacy of espresso type coffee.

The process includes the supply of coffee tablets (1) so that 12 hours after compaction, they present at least one of, preferentially at least two of:
- an exterior volume comprised between 2 and 6 mm³, preferentially between 2,5 and 4 mm³,
- a height comprised between 7 and 13 mm, preferentially between 8 and 12 mm, particularly preferentially between 9 and 11 mm, and
- diameter comprised between 25 and 45 mm, preferentially between 30 and 40 mm.

The process can include a step of packaging of the compacted coffee tablet (1) after the step of compaction, whereby said step of packaging is preferentially carried out no later than two hours after, preferentially no later than one hour after the step of compaction in the compaction machine (2).

The step of compaction is preferentially not preceded of a step of association of an envelope element to an individual quantity (Qᵢ), and the individual support compaction (21) neither is nor collects a packaging element of the compacted coffee tablet (1).

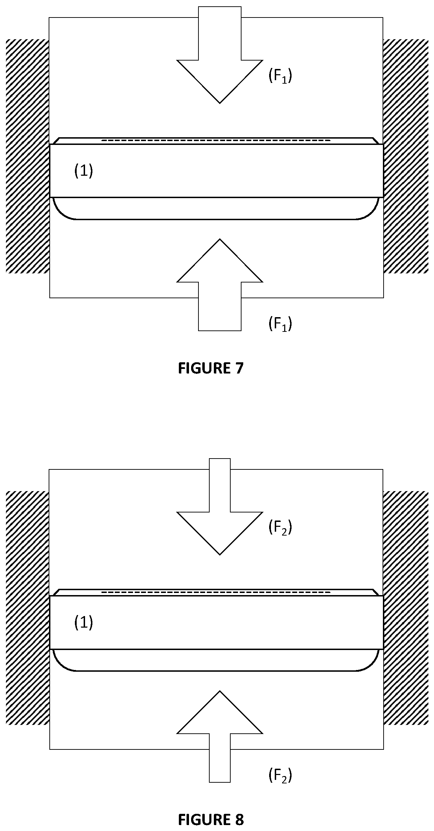

As represented on the diagram of **Figure 6****,** and on **Figures 7** and **8****,** the process according to the present invention includes the application of a first compaction force (F₁), and of a second compaction force (F₂) after the first (F₁), upon the initial quantities (Qᵢ).

According to tests that have been carried out, it has been demonstrated as advantageous to operate the application of two successive compaction force, in particular with a first compaction force (F₁) bigger than a second compaction force (F₂).

The step of compaction can include the successive application of a first compaction force (F₁) and of a second compaction force (F₂) upon the individual quantities (Qᵢ), whereby the first compaction force (F₁) is bigger than the second force compaction (F₂) .

Moreover, complementarily or alternatively, the step of compaction can include the successive application of two compaction forces (F₁, F2) so that the ratio between the first and the second compaction forces (F₁, F₂) is bigger than 1.50:1, preferentially bigger than 2:1, and is smaller than 4:1, preferentially smaller than 3:1.

In this context, it has been demonstrated as particularly advantageous when the step of compaction includes the application of a first compaction force (F₁) smaller than 50 kN, preferentially equal or smaller than 45 kN, and further includes the application of a second compaction force (F₂) smaller than 20 kN, preferentially smaller than 17 kN, after the application of the first compaction force (F₁).

The tests that have been carried out further showed that a very high value of second compaction force (F₂) can give rise to "capping" problems, which means that a portion of the coffee tablet (1) can remain retained inside the individual collection openings (21), thereby leasing to operational risks of the compaction machine (2).

The application of a second compaction force (F₂) smaller than 20 kN, preferentially smaller than 17 kN, solves this problem.

It is preferred when the compaction step includes the application of a first compaction force (F₁) comprised between 35 and 45 kN, preferentially comprised between 37 and 43 kN, particularly preferentially between 38 and 42 kN, and followed by the application of a second compaction force (F₂) of value smaller than the first compaction force (F₁).

It is preferred when the step of compaction includes the application of a second compaction force (F₂) comprised between 5 and 20 kN, preferentially comprised between 7 and 18 kN, particularly preferentially between 8 and 16 kN, and preceded of the application of a first compaction force (F₁) of bigger value than the second compaction force (F₂).

According to one aspect, the step of compaction includes the application of a second compaction force (F₂) with a delay relative to the application of a first compaction force (F₁) smaller than 0,5 seconds, preferentially smaller than 0,3 seconds, so that each of the compaction cycles presents a period of less than 1 seconds, preferentially of less than 0,7 seconds.

The compaction process can include only two compaction forces (F₁, F₂).

The process can include three phases of application of a compaction force, whereby it is preferred when at least two phases present a different value of a respective compaction force.

The process can include the application of compaction forces along the direction of the central symmetry axis of the compacted coffee tablets, and similar to the prevailing direction of the pressurised flow.

The process can include only the application of compaction forces, so that the efficiency of the process can be improved.

The process does not include a step of degassing of the roast and ground coffee beans previously to the step of compaction.

The process does not include a step of humidification of the roast and ground coffee beans previously to the step of compaction.

The process does not include the application of a compaction force upon an individual quantity (Qᵢ) disposed upon a base element, for example of the type container of base folio, that is part of a respective single package.

## Claims

1. Process for producing compacted coffee tablets (1),
**characterized**
**in that** the process comprises:
- a step of supplying individual quantities (Qᵢ) of roast and ground coffee beans for compaction, and
- a step of compaction that includes the successive application of a first compaction force (F₁) and of a second compaction force (F₂) upon the individual quantities (Qᵢ), whereby the first compaction force (F₁) is bigger than the second compaction force (F₂).

2. Process according to claim 1,
**characterized in that** the step of compaction includes the successive application of two compaction forces (F₁, F₂) so that the ration between the first and second compaction forces (F₁, F₂) is bigger than 1.50:1, preferentially bigger than 2:1, and is smaller than 4:1, preferentially smaller than 3:1.

3. Process according to claim 1 or 2,
**characterized in that** the step of compaction includes the application of a first compaction force (F₁) smaller than 50 kN, preferentially equal or smaller than 45 kN,
and/or
**in that** the compaction step includes the application of a second compaction force (F₂) smaller than 20 kN, preferentially smaller than 17 kN.

4. Process according to claims 1 to 3,
**characterized in that** the compaction step includes the application of a first compaction force (F₁) comprised between 35 and 45 kN, preferentially between 37 and 43 kN, particularly preferentially between 38 and 42 kN, and followed by the application of a second compaction force (F₂) smaller than the first compaction force (F₁).

5. Process according to any of claims 1 to 4,
**characterized in that** the compaction step includes the application of a second compaction force (F₂) comprised between 5 and 20 kN, preferentially comprised between 7 and 18 kN, particularly preferentially between 8 and 16 kN, and preceded of the application of a first compaction force (F₁) bigger than the second compaction force (F₂).

6. Process according to claims 1 to 5,
**characterized in that** the application of a second compaction force (F₂) presents a delay relative to the application of a first compaction force (F₁) of less than 0,5 seconds, preferentially less than 0,3 seconds, so that the compaction cycles present a period of less than 1 seconds, preferentially of less than 0,6 seconds.

7. Process according to any of claims 1 to 6,
**characterized in that** the compaction cycles are regulated so that the supply of compacted coffee tablets (1) by a compaction machine (2) presents a production rate of at least 10.000 units per hour for each compaction set, preferentially a production rate of at least 25.000 units per hour for each compaction set.

8. Process according to any of claims 1 to 7,
**characterized in that** the compaction step does not include a period of maintenance of reduced volume of the individual quantities (Qᵢ), whereby the impact period of the compaction forces d (F; F₁, F₂) upon the individual quantities (Qᵢ) of edible substance is of less than 0,5 seconds, preferentially less than 0,2 seconds.

9. Process according to any of claims 1 to 8,
**characterized in that** the process includes the supply of coffee tablets (1) that t twelve hours after compaction, present a variation of respective dimension parallel to the compacting direction, for example height, that is smaller than 10%, preferentially smaller than 7%,
and/or
**in that** the individual quantities (Qᵢ) present a humidity of less than 3% in weight, preferentially comprised between 1,5% and 3% in weight, particularly preferentially between 2,0% and 2,8% in weight.

10. Process according to any of claims 1 to 9,
**characterized in that** the process includes the steps:
- providing a compacting machine (2) presenting a plurality of individual compaction openings (21) operable with compaction punches (22, 23);
- supplying individual quantities (Qᵢ) of at least one edible substance presenting a Hausner index smaller than 1.30, to respective compaction individual supports (21);
- operating the compaction of the individual quantities (Qᵢ) by means of applying thereupon vertically reciprocal forces with a value comprised between 5 kN and 50 kN;
- discharging coffee tablets (1) out of the compacting machine (2), that present a hardness comprised between 4 N and 30 N and a compacted density comprised between 0,15 g/ml and 1,0 g/ml;
so that the coffee tablets (1) provide circulation of pressurized flow of extraction with a pressure comprised between 5 bar and 20 bar along a prevailing flow direction that is orthogonal to a characteristic dimension (D) of the coffee tablet (1), without disaggregation or dissolution thereof when impacted by the pressurized flow of extraction.

11. Process according to any of the previous claims, **characterized in that** the supply of individual quantities (Qᵢ) in each compaction cycle includes a successive supply along a vertical direction to a plurality of at least 10, preferentially to at least 20 individual collection openings (21) arranged along a common alignment, whereby the successive supply of individual quantities (Qᵢ) to the totality of said plurality of individual collection openings (21) is preferentially carried out in a period of time of less than 1 second, particularly preferentially of less than 0,5 seconds.

12. Process according to any of previous claims, **characterized in that** the supply of individual quantities (Qᵢ) includes the supply at least approximately simultaneous to groups of individual collection openings (21) including at least 2, preferentially at least 4 individual collection openings (21), and that correspond to a part of the plurality of individual collection openings (21) of the compacting machine (2).

13. Process according to any of previous claims, **characterized in that** the supply of individual quantities (Qᵢ) for compaction includes supplying a granular edible substance presenting at least one of:
- a Hausner index comprised between 1,1 and 1,35, preferentially between 1,15 and 1,30, particularly preferentially between 1,20 and 1,25;
- a compressibility index comprised between 10% and 30%, preferentially between 15% and 25%.

14. Process according to any of the previous claims, **characterized in that** the supply of individual quantities (Qᵢ) for compaction includes supply a granular edible substance presenting a granulometry with at least one of:
- average dimension of the most part of particles comprised between 0,3 and 1,0 mm, preferentially between 0,3 and 0,8 mm;
- average dimension of particles of Dᵥ₁₀ of 100 micrometre or less, and of Dᵥ₉₀ comprised between 700 micrometre and 1 mm, preferentially between 750 and 950 micrometre.

15. Compacted coffee tablet (1) for preparing a coffee beverage of the espresso type,
**characterized in that** the compacted coffee tablet (1) presents a humidity comprised between 0,3% and 3% in weight, a compacted density comprised between 0,15 g/ml and 1,00 g/ml and a hardness comprised between 4 N and 30 N, so that the coffee tablet (1) is adapted for crossing by a pressurized extraction flow with a flow pressure comprised between 5 and 20 bar.

16. Compacted coffee tablet according to claim 14, **characterized in that** the compacted coffee tablet (1) presents at least one of:
- a humidity comprised between 0,5% and 2,7% in weight, preferentially between 0,7% and 2,6% in weight;
- a hardness comprised between 4 N and 22 N, preferentially in at least one of the intervals: between 4 N and 10 N, between 10 N and 16 N and between 16 N and 22 N;
- a friability smaller than 10%, preferentially smaller than 8%;
- a compacted density comprised between 0,300 and 0,750 g/ml, preferentially between 0,400 and 0,600 g/ml;
- a volume comprised between 250 mm³ and 450 mm³, preferentially between 300 mm³ and 400 mm³;
- presents at least one of, preferentially both of the following dimensions: a total height (H_{T}) comprised between 5 mm and 12 mm, preferentially between 7 mm and 10 mm, and a characteristic dimension (D) comprised between 30 mm and 44 mm, preferentially between 32 mm and 40 mm;
- an aspect ratio between width and height comprised between 1:1 and 5:1, preferentially between 2:1 and 3,5:1, whereby it is preferred when the coffee tablets (1) do not present perimeter regions with an orthogonal edge.
